# EUROPÄISCHE PATENTSCHRIFT

(11) **EP 2 936 408 B1**
(45) Veröffentlichungstag und Bekanntmachung des Hinweises auf die Patenterteilung: **14.12.2016**
(21) Anmeldenummer: 13792607.7
(22) Anmeldetag: 28.10.2013
(51) Int. Cl.: G06Q 20/36, G06Q 20/32

(54) **VERFAHREN UND SYSTEM ZUR TOKEN-BASIERTEN KOMMUNIKATION ZWISCHEN FREMDANWENDUNGEN UND EINEM ELEKTRONISCHEN WALLET**
METHOD AND SYSTEM FOR TOKEN-BASED COMMUNICATION BETWEEN THIRD PARTY APPLICATIONS AND AN ELECTRONIC WALLET
PROCÉDÉ ET SYSTÈME DE COMMUNICATION À BASE DE JETON ENTRE DES APPLICATIONS TIERCES ET UN PORTE-MONNAIE ÉLECTRONIQUE

(30) Priorität: 19.12.2012 EP 12198254
(43) Veröffentlichungstag der Anmeldung: 28.10.2015
(73) Patentinhaber: Deutsche Telekom AG, 53113 Bonn (DE)
(72) Erfinder: REN, Zhiyun, 12357 Berlin (DE); HEUER, Jörg, 14163 Berlin (DE); HOFMAN, Klaus-Peter, 12205 Berlin (DE)
(74) Vertreter: Vossius & Partner Patentanwälte Rechtsanwälte mbB
(86) Internationale Anmeldenummer: PCT/EP2013/072510
(87) Internationale Veröffentlichungsnummer: WO 2014/095136

(56) Entgegenhaltungen:
- EP-A1- 2 500 875
- US-A1- 2009 234 751
- US-A1- 2012 130 839
- Ernst-Joachim Steffens, Axel Nennker, Zhiyun Ren, Ming Yin, Lutz Schneider: "The SIM-based mobile wallet", Proceedings of the 2009 13th International Conference on Intelligence in Next Generation Networks , 26. Oktober 2009 (2009-10-26), Seiten 99-104, XP002698945, Gefunden im Internet: URL:http://ieeexplore.ieee.org/stamp/stamp .jsp?tp=&arnumber=5357095 [gefunden am 2013-06-17]
- ERIKA CHIN ET AL: "Analyzing inter-application communication in Android", MOBISYS '11, ACM, US, 28. Juni 2011 (2011-06-28), Seiten 239-252, XP058004575, DOI: 10.1145/1999995.2000018 ISBN: 978-1-4503-0643-0

## Beschreibung

Die Erfindung betrifft ein Verfahren sowie ein System zur token-basierten Kommunikation zwischen Fremdanwendungen und einem elektronischen Wallet. Insbesondere betrifft die Erfindung ein Verfahren sowie ein System zur token-basierten Kommunikation zwischen Fremdanwendungen und einem elektronischen Wallet, bei dem die Fremdanwendungen in einfacher Weise mit einem elektronischen Wallet kommunizieren können und die Funktionen eines für drahtlose Funkkommunikation konfigurierten Sicherheitselements nutzen können.

### Verwendete Abkürzungen

| | |
|---|---|
| NFC | Near Field Communication |
| UICC | Universal Integrated Circuit Card |
| SIM | Subscriber Identity Module |
| APDU | Application Protocol Data Unit |
| CRS | Contactless Registry Service |
| PPSE | Proximity Payment Systems Environment |
| POS | Point of Sale |
| API | Programmierschnittstelle (Application Programming Interface) |

### Stand der Technik

Unter einem elektronischen Wallet (im Folgenden auch einfach als "Wallet" bezeichnet) versteht man ein Hard- und Software-Modul innerhalb eines Endgeräts, zumeist eines mobilen Endgeräts wie beispielsweise einem Mobiltelefon oder Smartphone, das aus zwei Teilen besteht:
- Einem "Secure Element", im Folgenden auch "Sicherheitselement" genannt (z.B. in Form einer SIM-Karte/UICC oder einer in den Chipsatz des Endgeräts integrierten Javacard), mit darauf befindlichen Java Applets, die einerseits von Anwendungen auf dem Endgerät als auch über drahtlose Funkkommunikation (beispielsweise NFC) von Akzeptanzstellen (also Kartenlesern) im Card Emulation Mode angesprochen werden können.
- Einer Software zur Darstellung, Verwaltung sowie der Ermöglichung von Nutzerinteraktionen für die auf dem Sicherheitselement (Secure Element) befindlichen Javacard-Anwendungen.

Im Ergebnis erlaubt diese Architektur des elektronischen Wallets die Abbildung realer Smart Cards (für verschiedenste Anwendungsfelder wie Bezahlen, Kundenkarte, Coupons) auf das Endgerät, wobei die Rolle des Chips der realen Karte von den Java Applets auf dem Sicherheitselement, beispielsweise der UICC, übernommen wird und die Rolle des Aufdrucks (also der Beschriftung, der Gestaltung, des Logos und/oder sonstigen Kennzeichnungen) auf der physischen Karte durch die Wallet-Software auf dem Endgerät, beispielsweise dem Mobiltelefon.

Unter einer "Applet" sei dabei und im Folgenden eine Anwendung verstanden, die für die Ausführung auf einem Sicherheitselement konfiguriert ist.

Ferner sei im Folgenden eine Anwendung, die für die Ausführung unter dem Betriebssystem des Endgeräts konfiguriert ist, als "App" bezeichnet.

Das Betriebssystem des Endgeräts wird im Folgenden auch als "Plattform" bezeichnet. Unter einer "mobilen Plattform" sei das Betriebssystem eines mobilen Endgeräts verstanden.

Ferner soll unter dem Begriff "Objekt" im Folgenden eine Datenstruktur mit Operationen auf diese Datenstruktur verstanden werden.

Befindet sich das elektronische Wallet auf einem mobilen Endgerät wie etwa einem Mobiltelefon, so soll das elektronische Wallet auch als "Mobile Wallet" bezeichnet werden.

Java Applets auf dem Sicherheitselement werden in der Benutzungsschnittstelle des elektronischen Wallets normalerweise als graphische Objekte wie beispielsweise Karten dargestellt, mit denen der Nutzer interagieren kann. Typische Interaktionen sind:
- Aktivieren zwecks Nutzung über die kontaktlose Schnittstelle,
- Deaktivieren, wenn z.B. aus Sicherheitsgründen eine Bezahlanwendung nicht über die kontaktlose Schnittstelle nutzbar sein soll.

Diese Funktionen werden typischerweise von einer als "Core Wallet" bezeichneten Komponente mit Hilfe der standardisierten CRS- und PPSE-Applets bereitgestellt. Das Core Wallet ist eine Komponente des Wallets. Das CRS-Applet steuert dabei die Aktivierung der Applets auf dem Sicherheitselement, während das PPSE-Applet speziell für Bezahl-Applets deren Aktivierung und Nutzungspräferenz steuert.

CRS steht für "Contactless Registry Service" und ist in Global Platform Card Services Specification v2.2 Amendment C Contactless Services spezifiziert. Dies ist ein Applet auf der UICC, das sämtliche NFC-Applets auflistet sowie die Manipulation ihres Status (aktiv/inaktiv - siehe oben) erlaubt. Das PPSE ("Proximity Payment System Environment") ist ein weiteres in der EMV Entry Point Specification definiertes Applet, das alle Bezahl-Applets auf der UICC auflistet, die der Nutzer zur Bezahlung freigegeben hat sowie eine Rangfolge der Präferenz der Nutzung. Beide Applets können nur vom Wallet bzw. Core Wallet verwaltet werden.

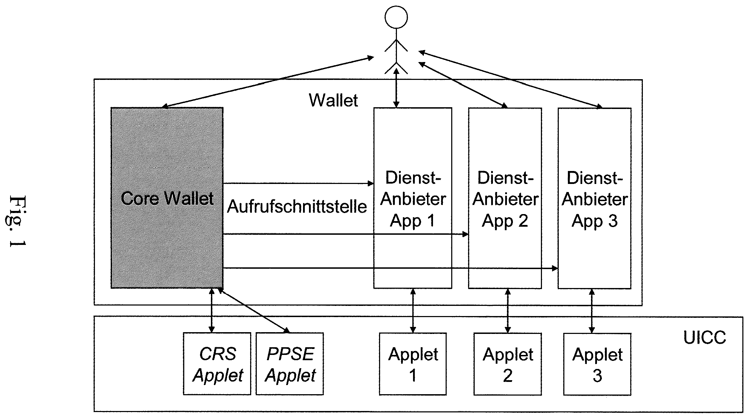

Typischerweise ist es bei diesem Modell notwendig, einerseits für jede Karte im Wallet ein Applet auf dem Sicherheitselement aufzubringen und andererseits eine Dienstanbieter-App zu programmieren, die mit dem Applet auf dem Sicherheitselement interagiert, um eine graphische Benutzungsschnittstelle anbieten zu können (siehe Fig. 1).

Anmerkung: Unter dem Begriff "Dienstanbieter-App" sollen im Folgenden genau solche Apps auf dem Endgerät verstanden werden, die direkt mit einem entsprechenden Dienstanbieter-Applet auf dem Sicherheitselement kommunizieren.

"Drittanbieter-Apps" (im Folgenden auch "Fremdanwendung" genannt) sind dagegen alle anderen Apps auf dem Endgerät, die keine Kommunikationsschnittstelle einerseits zu Applets auf dem Sicherheitselement noch über drahtlose Funkkommunikation, beispielsweise NFC, zu anderen Gegenstellen haben.

Die Core-Wallet-Komponente listet alle auf einem Endgerät verfügbaren Dienstanbieter-Apps auf und erlaubt deren Aufruf über eine Aufrufschnittstelle. Alternativ kann der Nutzer unter Umgehung des Wallets bzw. des Core Wallets die Dienstanbieter-Apps über den App-Starter des auf dem Endgerät installierten Betriebssystems starten.

Aufgabe des Core Wallets ist es beim Stand der Technik, die Services im Wallet anzuzeigen, die einem Applet auf dem Sicherheitselement entsprechen sowie eine (gegebenenfalls optionale) Benutzungsschnittstelle in Form einer dazugehörigen App aufweisen. Das Core Wallet erlaubt es außerdem, die einzelnen Applets über drahtlose Funkkommunikation (beispielsweise NFC) "sichtbar" und "unsichtbar" zu machen (Aktivieren und Deaktivieren an der kontaktlosen Schnittstelle). Diese Funktion kann der Nutzer verwenden, um z.B. Bezahldienste in der Schlange im Supermarkt zu aktivieren und nach der Bezahlung wieder zu deaktivieren. Das Core Wallet kann einerseits vorinstalliert sein (gegebenenfalls als Bestandteil des Betriebssystems) oder als App nachgeladen werden.

### Vorteile gegenüber dem Stand der Technik

Das oben skizzierte Modell weist zumindest folgende Nachteile und Probleme auf:
- Zur Verwendung eines bestimmten Dienstes muss der Nutzer zwei Anwendungen verwenden: Zunächst aktiviert er im Core Wallet das zum Dienst gehörende Applet, so dass es für drahtlose Funkkommunikation, wie etwa NFC, nutzbar ist. Danach muss er gegebenenfalls in die dienst-spezifische App (d.h. die Dienstanbieter-App) wechseln, um dort Konfigurationen für die bevorstehende Dienstnutzung vorzunehmen.
- Weiterhin ist es für einige Transaktionen notwendig, mehrere Dienste auf dem Sicherheitselement hintereinander zu verwenden. In diesem Fall muss der Nutzer den oben beschriebenen Ablauf mehrfach durchlaufen.
- Da Core Wallet und Dienstanbieter-Apps meistens von verschiedenen Anbietern stammen, ist ihr Aussehen und Nutzungskonzept ("look & feel") häufig sehr unterschiedlich. Der Nutzer muss sich also bei den oben beschriebenen, wiederholten Abläufen jeweils auf verschieden aussehende und zu bedienenden Nutzungsschnittstellen einstellen.

Insgesamt ist festzuhalten, dass die reine, in Fig. 1 gezeigte Architektur zu einem sehr schlechten Nutzererlebnis des elektronischen Wallets führt. Unter Nutzererlebnis ist hier die Abfolge der Interaktionen des Nutzers mit dem Endgerät und der darauf installierten Software sowie die graphische Gestaltung der Software zu verstehen.

Weitere Nachteile und Probleme des oben skizzierten Modells gemäß dem Stand der Technik sind etwa:
- Für jedes Objekt, das im Wallet bzw. Core Wallet sichtbar sein soll, ist ein Applet auf dem Sicherheitselement (z.B. der UICC) sowie gegebenenfalls eine Dienstanbieter-App notwendig. Speicherplatz auf dem Sicherheitselement ist jedoch beschränkt und knapp, zudem ist die Implementierung der Dienstanbieter-App für den Dienstanbieter aufwendig.
- Des Weiteren erfordert die Installation einer solchen Kombination von Applet und App erhöhten Aufwand im Vergleich zum einfachen Einstellen einer App in einem App Store.
- Für die Dienstanbieter ist es im Allgemeinen vorteilhafter und einfacher, eine einfache App zu programmieren, die dann aber wiederum nicht von den Vorteilen der Anbindung an eine drahtlose Funkkommunikation (z.B. einer NFC-Anbindung) des Sicherheitselements profitieren würde. Insbesondere verfügen viele Dienstanbieter bereits über Apps, die sie gerne weiter nutzen würden.

Es besteht also Bedarf für ein Verfahren sowie ein System zur token-basierten Kommunikation zwischen Fremdanwendungen und einem elektronischen Wallet, mit dem die oben genannten Nachteile und Probleme vermieden werden können bzw. nicht auftreten.

Aufgabe der vorliegenden Erfindung ist es, ein solches Verfahren bzw. ein solches System bereitzustellen. Diese Aufgabewird mit dem Verfahren bzw. mit dem System zur token-basierten Kommunikation zwischen Fremdanwendungen und einem elektronischen Wallet gemäß den vorliegenden Patentansprüchen gelöst.

Ein Aspekt der Erfindung betrifft ein Verfahren zur token-basierten Kommunikation zwischen Fremdanwendungen und einem elektronischen Wallet auf einem System. Das System weist ein Endgerät auf, wobei: das Endgerät konfiguriert ist zur Aufnahme eines oder mehrerer Sicherheitselemente; auf dem Endgerät eine oder mehrere Programmierschnittstelle(n) (APIs) zum Auflisten, Auswählen und Interagieren mit den Sicherheitselementen installiert sind; und das Endgerät einen Chipsatz zur drahtlosen Funkkommunikation aufweist. Das System weist ferner einen oder mehrere mit dem Chipsatz zur drahtlosen Funkkommunikation verbundene Sicherheitselement(en) auf, die in das Endgerät aufgenommen sind. Ferner weist das elektronische Wallet ein Core Wallet auf. Das Verfahren weist folgende Schritte auf:
(a) Selektion von Objekten zum Ablegen im Core Wallet durch eine oder mehrere Fremdanwendung(en);
(b) Senden von Informationen über die selektierten Objekte durch die Fremdanwendung(en) an das Core Wallet;
(c) Darstellung der selektierten Objekte durch das Core Wallet auf dem Endgerät;
(d) Warten auf Aktivierung zumindest eines der dargestellten Objekte durch Interaktion des Nutzes mit dem Core Wallet;
(e) Abrufen eines dem Objekt zugeordneten Tokens bei der Fremdanwendung, aus der das Objekt stammt, durch das Core Wallet für jedes der aktivierten Objekte;
(f) Ablegen der in Schritt (e) abgerufenen Tokens in einem Wallet Applet, das auf einem für drahtlose Funkkommunikation konfigurierten Sicherheitselement installiert ist.

In einer bevorzugten Ausführungsform des beschriebenen Verfahrens ist das Endgerät zur Mobilfunkkommunikation geeignet; das Endgerät kann beispielsweise ein Mobilfunkgerät oder ein Smartphone sein und/oder zur WLAN-Kommunikation geeignet sein. Bei dem Endgerät kann es sich beispielsweise auch um einen Laptop/ein Notebook oder einen Tablet Computer handeln.

In einer Ausführungsform weist das Verfahren den folgenden weiteren Schritt auf:
Auslesen der in Schritt (f) im Wallet Applet abgelegten Tokens durch eine zur Funkkommunikation mit dem Sicherheitselement geeigneten Akzeptanzstelle, beispielsweise einer für drahtlose Funkkommunikation konfigurierten Kasse.

In einer Ausführungsform weist Schritt (a) der Selektion von Objekten die folgenden Schritte auf:
Warten der Fremdanwendung(en) auf eine Interaktion des Nutzers;
Selektion der Objekte basierend auf der durch die Interaktion des Nutzers an die Fremdanwendung(en) übermittelten Informationen.

Dabei ist vorzugsweise die Interaktion des Nutzers ein Markieren von Objekten ist. Weiterhin werden bevorzugt bei der Selektion der Objekte durch die Fremdanwendung(en) genau die vom Nutzer markierten Objekte ausgewählt.

In einer Ausführungsform des Verfahrens erfolgt die Selektion von Objekten nach Schritt (a) durch die Fremdanwendung(en) selbsttätig gemäß vordefinierter Filterkriterien.

In einer Ausführungsform des Verfahrens wird Schritt (b) des Sendens von Informationen über die selektierten Objekte von den Fremdanwendung(en) an das Wallet über eine im Core Wallet implementierte Schnittstelle zum Übermitteln von Informationen realisiert.

Vorzugsweise weisen dabei die Information beschreibenden Text und/oder ein oder mehrere graphische Elemente zur Darstellung der Objekte im Wallet auf.

In einer Ausführungsform des Verfahrens weist Schritt (c) der Darstellung der selektierten Objekte auf einem Endgerät auf die Anzeige von Text oder graphischen Elementen auf dem Display des Endgeräts.

In einer Ausführungsform des Verfahrens weist Schritt (c) der Darstellung der selektierten Objekte auf einem Endgerät auf das Abspielen akustische Signale oder Ansagen.

In einer Ausführungsform des Verfahrens erfolgt das Abrufen von Tokens bei den Fremdanwendung(en) durch das Core Wallet gemäß Schritt (e) über eine in der Fremdanwendung implementierte Schnittstelle zum Abrufen eines Tokens.

In einer Ausführungsform des Verfahrens wird die drahtlose Funkkommunikation durch funkbasierte Nahbereichskommunikation (NFC) realisiert.

In einer Ausführungsform des Verfahrens ist das Sicherheitselement eine Universelle Karte mit integriertem Schaltkreis (Universal Integrated Circuit Card, UICC) oder eine SIM-Karte ist.

Ein Aspekt der Erfindung betrifft ein System zur token-basierten Kommunikation zwischen Fremdanwendungen und einem elektronischen Wallet. Dabei weist das System ein Endgerät auf, wobei das Endgerät konfiguriert ist zur Aufnahme eines oder mehrerer Sicherheitselemente; auf dem Endgerät eine oder mehrere Programmierschnittstelle(n) (APIs) zum Auflisten, Auswählen und Interagieren mit den Sicherheitselementen installiert sind; und das Endgerät einen Chipsatz zur drahtlosen Funkkommunikation aufweist. Das System weist ferner ein oder mehrere mit dem Chipsatz zur drahtlosen Funkkommunikation verbundene Sicherheitselement(e) auf, die in das Endgerät aufgenommen sind. Dabei ist auf dem Endgerät ein Core Wallet installiert, wobei das Core Wallet zum Empfang von durch Fremdanwendung(en) gesendeten Informationen und Abrufen von Tokens bei Fremdanwendung(en) konfiguriert ist. Ferner ist das Endgerät zur Darstellung von Objekten im Core Wallet und zur Aktivierung der Objekte im Core Wallet durch Interaktion des Nutzers konfiguriert. Zudem ist auf den ein oder mehreren Sicherheitselementen jeweils eine Wallet Applet installiert, wobei die Wallet Applets jeweils zum Empfang und zur Ablage von Tokens aus dem Core Wallet konfiguriert sind.

In einer bevorzugten Ausführungsform des beschriebenen Systems ist das Endgerät zur Mobilfunkkommunikation geeignet; das Endgerät kann beispielsweise ein Mobilfunkgerät oder ein Smartphone sein, und/oder zur WLAN-Kommunikation geeignet sein. Bei dem Endgerät kann es sich beispielsweise auch um einen Laptop/ein Notebook oder einen Tablet Computer handeln.

In einer Ausführungsform des Systems sind die Wallet Applets jeweils zum Auslesen der im entsprechenden Wallet Applet abgelegten Tokens durch eine zur Funkkommunikation mit dem Sicherheitselement, auf dem das entsprechende Wallet Applet installiert ist, geeigneten Akzeptanzstelle, beispielsweise einer für drahtlose Funkkommunikation konfigurierten Kasse, konfiguriert.

In einer Ausführungsform des Systems weist das Core Wallet eine Schnittstelle zum Übermitteln von Informationen aus den Fremdanwendungen an das Core Wallet auf.

In einer Ausführungsform des Systems weisen die Fremdanwendungen jeweils eine Schnittstelle zum Abruf von Tokens durch das Core Wallet auf.

In einer Ausführungsform des Systems wird die drahtlose Funkkommunikation durch funkbasierte Nahbereichskommunikation (NFC) realisiert.

In einer Ausführungsform des Systems ist jedes der Sicherheitselemente eine Universelle Karte mit integriertem Schaltkreis (Universal Integrated Circuit Card, UICC) oder eine SIM-Karte.

Die vorliegende Erfindung zeigt einen Weg auf, wie Nutzer Dienste von separat installierten Drittanbieter-Apps (Fremdanwendungen) verwenden können, ohne die einheitliche Umgebung des Core Wallets zu verlassen. Die vorliegende Erfindung zeigt ferner einen Weg auf, wie Dienstanbieter über die Nutzung von Schnittstellen zum Wallet bzw. Core Wallet die Vorteile des Wallets bzw. Core Wallets nutzen können, dabei aber die oben beschriebenen Nachteile vermeiden können. Insbesondere ergeben sich aus der im Folgenden im Detail beschriebenen Erfindung folgende Vorteile:
- Der Nutzer braucht das Wallet nicht zu verlassen, um Dienstanbieter-Apps bzw. Fremdanwendungen zu aktivieren, zu konfigurieren oder zu nutzen.
- Dienstanbieter müssen nicht selbst Platz auf dem Sicherheitselement (z.B. der UICC) reservieren, um ihre Objekte per drahtlose Funkkommunikation (z.B. NFC) an entsprechenden Akzeptanzstellen sichtbar zu machen.
- Dienstanbieter müssen keine Applets programmieren oder besorgen und konfigurieren.
- Dienstanbieter können ihre existierenden Apps weiterverwenden: dazu müssen sie diese lediglich um Schnittstellen zum Wallet erweitern.
- Die Konzentration von Objekten im Wallet bzw. Core Wallet sowie die Anbindung von Dienstanbieter-Apps und Fremdanwendungen über Schnittstellen an das Wallet erlaubt eine engere Integration verschiedener Dienste, die im Wallet konzentriert werden. So können z.B. beim Bezahlen an einer Kasse drei Klassen von Objekten gemeinsam behandelt werden, ohne Dienstanbieter-Apps für den Nutzer sichtbar aufrufen zu müssen: Bezahlen, Einlösen eines Coupons, Einsetzen einer Bonuskarte.
- Für sehr spezielle Funktionen ist nach wie vor ein Start der Dienstanbieter-App möglich, so dass es keinerlei funktionelle Einschränkungen zur ursprünglichen Architektur gibt.

Es zeigen:
- Figur 1:: Wallet-Architektur mit Core Wallet-Komponente sowie Dienstanbieter Apps;
- Figur 2:: Registrierung der Dienstanbieter-Apps beim Wallet;
- Figur 3:: Transaktion am Point-of-Sale mit drei beteiligten Diensten;
- Figur 4:: Virtueller Objektfluss von Dienst-/Drittanbieter-App bis hin zum POS;
- Figur 5:: Sequenzdiagramm der API-Aufrufe.

Die Erfindung wird nachstehend anhand von Beispielen und der Zeichnung erläutert.

### Wirkungsweise der Erfindung

Voraussetzungen:
1) Der Nutzer verfügt über ein Mobiltelefon oder anderes Endgerät, das ein oder mehrere Sicherheitselemente aufnehmen kann.
2) Es existieren APIs auf dem Endgerät, um Sicherheitselemente aufzulisten, auszuwählen und mit APDU-Befehlen anzusprechen.
3) Für die drahtlose Funkkommunikation muss das Endgerät über einen entsprechend konfigurierten Chipsatz, beispielsweise einen NFC-Chipsatz, verfügen.
4) Die Plattform erlaubt eine Verzahnung von separat installierten Apps über entsprechende plattform-spezifische Mechanismen.

### Beschreibung des Verfahrens:

Das erfindungsgemäße Verfahren basiert darauf, Programmierschnittstellen zwischen beliebigen Dienstanbieter-Apps oder Fremdanwendungen und dem Wallet bzw. Core Wallet auf dem Endgerät zu schaffen, um eine Nutzung der Dienstanbieter-Apps ohne deren direkten Aufruf zu ermöglichen.

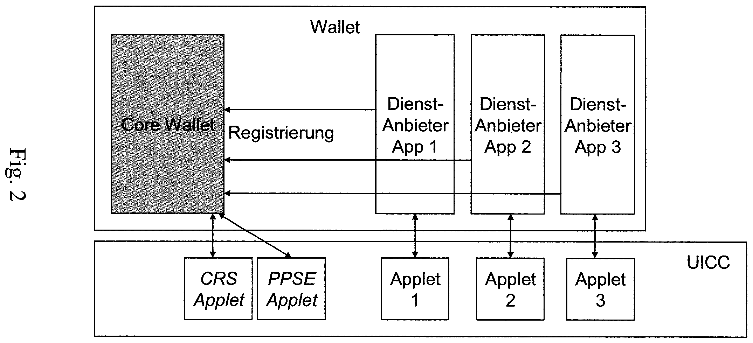

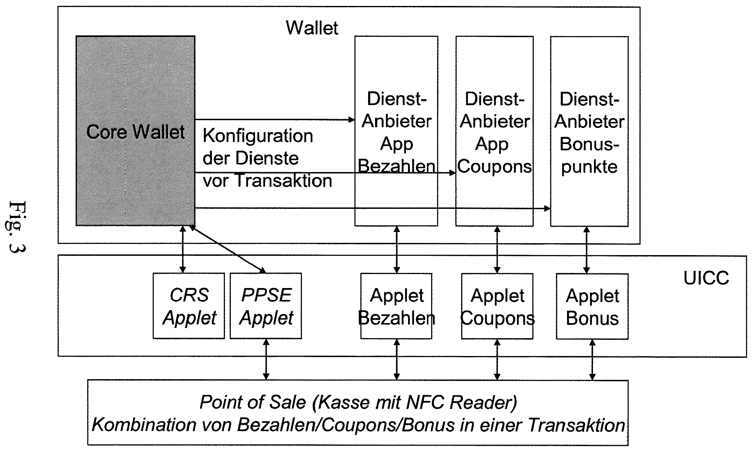

Der Lebenszyklus einer Dienstanbieter-App im Wallet besteht dazu im Wesentlichen aus zwei Phasen:
1. Registrierungsphase: Die Dienstanbieter-App registriert sich beim Core Wallet und übergibt dort Metadaten wie Name, Kurzbeschreibung und Logos. Zudem registriert die Dienstanbieter-App die ihr zur Verfügung gestellten Funktionen und Transaktionsparameter. Funktionen sind dabei diejenigen Operationen, die das Core Wallet ohne direkten Bezug auf eine Transaktion mittels drahtloser Funkkommunikation ausführen kann (z.B. Setzen eines allgemeinen Geld-Limits für den Betrag von NFC-basierten Zahlungen). Transaktionsparameter sind dagegen Konfigurationen für eine unmittelbar bevorstehende Transaktion (wie z.B. "Aktivierung der NFC-Bezahlfunktion für die nächste Transaktion"). Dies ist in Fig. 2 schematisch dargestellt.
2. Nutzungsphase: In dieser Phase ruft der Nutzer einerseits Funktionen der Dienstanbieter-Apps direkt im Wallet auf. Andererseits kann er Transaktionen (z.B. kombiniertes Bezahlen/Couponeinlösung/Sammeln von Bonuspunkten) bequem im Core Wallet vorbereiten, ohne die beteiligten Dienstanbieter-Apps direkt bedienen zu müssen (siehe Fig. 3).

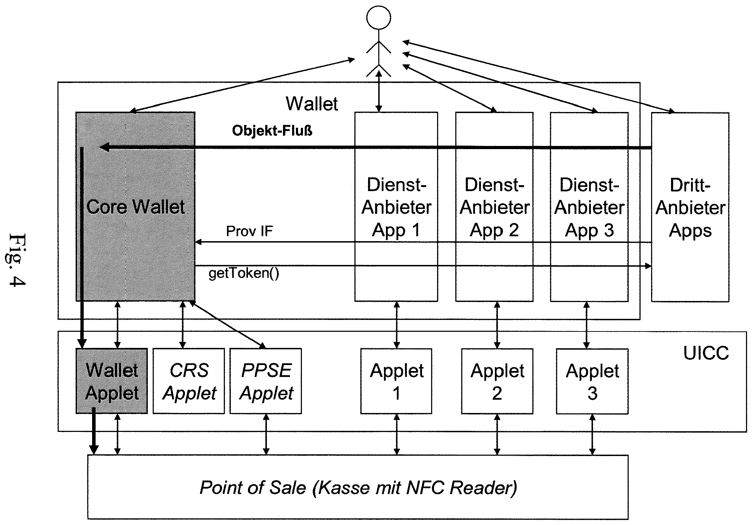

Aufgrund der Architektur ergibt sich ein virtueller Objektfluss: Objekte aus der Dienstanbieter-App bzw. der Fremdanwendung gelangen zunächst in das Wallet bzw. das Core Wallet, von dort in das Wallet Applet und dann weiter bis zur Akzeptanzstelle (z.B. einem POS-Terminal), wo sie schließlich verarbeitet werden (siehe Fig. 4).

Beispielsweise existieren Programmierschnittstellen zwischen beliebigen Fremdanwendungen (Drittanbieter-Apps) und dem Wallet bzw. Core Wallet auf dem Endgerät (dies können natürlich auch im Spezialfall wieder Dienstanbieter-Apps mit UICC/Applet-Anbindung sein), um Objekte im Wallet bzw. Core Wallet zu speichern. Dort sind diese Objekte (z.B. Coupons aus einer Coupon-Fremdanwendung) auf gleicher Ebene wie die Karten von Dienstanbieter Apps sichtbar und können vom Nutzer z.B. für die Nutzung via drahtloser Funkkommunikation (beispielsweise NFC) selektiert werden.

Damit die Objekte (z.B. Coupons) tatsächlich via drahtloser Funkkommunikation wie etwa NFC nutzbar sind, muss noch eine weitere Komponente auf dem Sicherheitselement (z.B. der UICC) installiert werden: das sogenannte Wallet Applet. In diesem Applet werden dann diejenigen Objekte, die der Nutzer selektiert hat, vom Wallet bzw. Core Wallet abgelegt, so dass sie von einer Akzeptanzstelle wiederum ausgelesen werden können.

Der Ablauf am Beispiel einer Coupon-Fremdanwendung (Coupon-Drittanbieter-App) könnte etwa wie folgt gestaltet sein (siehe Fig. 4):
1. Der Nutzer legt in der Fremdanwendung fest, welche der Coupons im Wallet bzw. Core Wallet sichtbar sein sollen. Dies kann einerseits durch explizite Selektion erfolgenden, andererseits durch Definition von Filterkriterien, nach denen die Fremdanwendung selbsttätig Coupons auswählt.
2. Sobald der Nutzer einen Bezahlvorgang unter Coupon-Einsatz initiieren möchte, startet er das Wallet bzw. Core Wallet.
3. Über die sogenannte "Content Provider Schnittstelle" (Prov IF) teilen die Fremdanwendungen dem Wallet bzw. Core Wallet Informationen über die selektierten Coupons mit. Dazu werden z.B. beschreibender Text und graphische Element zur Darstellung im Wallet bzw. Core Wallet mit übertragen.
4. Der Nutzer hat jetzt die Möglichkeit, die von den Fremdanwendungen übertragenen Objekte für die Nutzung über drahtlose Funkkommunikation (beispielsweise NFC) zu aktivieren.
5. Für jedes aktivierte Objekte benutzt das Wallet bzw. Core Wallet die getToken()-Schnittstelle, um ein anwendungsspezifisches Token von der Fremdanwendung zu holen und dieses für die Nutzung der drahtlosen Funkkommunikation (also etwa einer NFC-Nutzung) im Wallet Applet abzulegen.
6. Beim Kontakt mit der Akzeptanzstelle (also z.B. einer Kasse in einem Supermarkt) kontaktiert diese das Wallet Applet, um dort die Token für die Nutzung beim Bezahlvorgang auszulesen. Davor oder danach kann die Akzeptanzstelle auch mit anderen Applets auf dem Sicherheitselement (beispielsweise der UICC) interagieren, um z.B. die Bezahltransaktion durchzuführen.

Im Ergebnis findet also ein Fluss von Objekten statt: Von der Fremdanwendung in das Wallet bzw. Core Wallet, in das Wallet Applet auf dem Sicherheitselement (z.B. der UICC) und von dort aus weiter zur Akzeptanzstelle (siehe nochmals Fig. 4).

Das API des Wallets bzw. Core Wallets sieht hierbei (in an Java angelehntem Pseudo-Code) beispielsweise folgendermaßen aus:
StatusCode login(appType, appId, appDisplayName)
   - Erzeugt eine lose Kopplung zwischen der Dienstanbieter-App oder Fremdanwendung und dem Wallet bzw. dem Core Wallet. Dabei werden der Typ (beispielsweise 0 = Coupon, 1 = Loyalty-Card), die numerische appId, sowie ein appDisplayName als Zeichenkette an das Wallet bzw. Core Wallet übertragen. Beim Login überprüft das Wallet bzw. Core Wallet gegebenenfalls, ob die aufrufende App zum Login mit den übertragenen Daten berechtigt ist.

Das API der Dienstanbieter-App bzw. Fremdanwendung, das vom Wallet bzw. Core Wallet aufgerufen wird, sieht beispielsweise folgendermaßen aus:
StatusCode register()
   - Das Wallet bzw. Core Wallet sendet register() als Broadcast an alle auf dem System vorhandenen Apps. Dienstanbieter-Apps bzw. Fremdanwendungen, die diesen Aufruf erwarten, führen dann ein Login() auf das Wallet bzw. Core Wallet aus, um ihre Bereitschaft zur Kommunikation mit dem Wallet bzw. Core Wallet zu bekunden.
List of <CardId> getCards(SelectionFlag)
   - Liefert alle Karten (wenn SelectionFlag falsch) bzw. alle vom Nutzer selektierten Karten (wenn SelectionFlag wahr) an das Wallet bzw. Core Wallet zurück.
CardDisplayToken getCardDisplayToken(CardId)
   - Liefert eine Datenstruktur zur graphischen Darstellung einer Karte innerhalb des Wallets bzw. Core Wallets.
Token getToken(CardId)
   - Liefert ein Token für mit CardId angegebene Karte zurück. Das Wallet bzw. Core Wallet wird dieses Token über drahtlose Funkkommunikation, beispielsweise NFC, verfügbar machen. Der Inhalt des Token ist für das Wallet bzw. Core Wallet nicht wichtig, dieses muss nur von der Dienstanbieter-App sowie der Akzeptanzsstelle (POS) interpretiert werden können.
StatusCode notifyCardUsage(CardId)
   - Das Wallet bzw. Core Wallet informiert über diesen Aufruf die Dienstanbieter-App über die erfolgreiche Nutzung einer Karte.

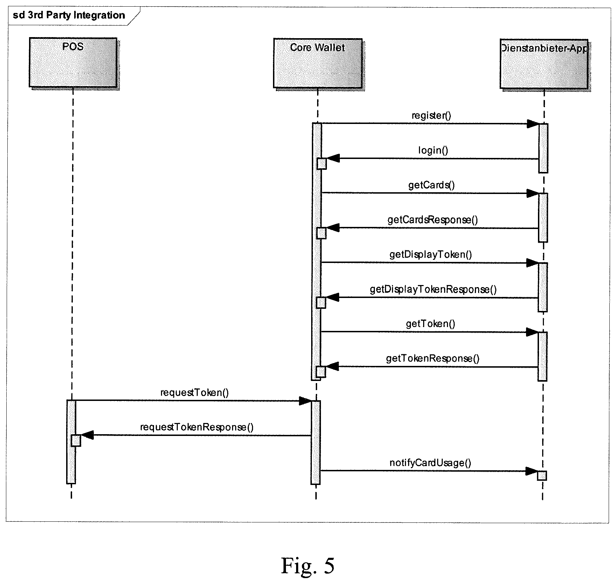

Eine beispielhafte Aufrufsequenz der hier dargestellten APIs wird in Fig. 5 dargestellt.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Verfahren zur token-basierten Kommunikation zwischen Fremdanwendungen und einem elektronischen Wallet auf einem System mit:
einem Endgerät, wobei:
das Endgerät konfiguriert ist zur Aufnahme eines oder mehrerer Sicherheitselemente;
auf dem Endgerät eine oder mehrere Programmierschnittstelle(n) (APIs) zum Auflisten, Auswählen und Interagieren mit den Sicherheitselementen installiert sind;
das Endgerät einen Chipsatz zur drahtlosen Funkkommunikation aufweist;
einem oder mehreren mit dem Chipsatz zur drahtlosen Funkkommunikation verbundenen Sicherheitselement(en), die in das Endgerät aufgenommen sind; und
wobei das elektronische Wallet ein Core Wallet aufweist;
mit den Schritten:
(1a) Selektion von Objekten zum Ablegen im Core Wallet durch eine oder mehrere Fremdanwendung(en);
(1b) Senden von Informationen über die selektierten Objekte durch die Fremdanwendung(en) an das Core Wallet;
(1c) Darstellung der selektierten Objekte durch das Core Wallet auf dem Endgerät;
(1d) Warten auf Aktivierung zumindest eines der dargestellten Objekte durch Interaktion des Nutzes mit dem Core Wallet;
(1e) Abrufen eines dem Objekt zugeordneten Tokens bei der Fremdanwendung, aus der das Objekt stammt, durch das Core Wallet für jedes der aktivierten Objekte;
(1f) Ablegen der in Schritt (1e) abgerufenen Tokens in einem Wallet Applet, das auf einem für drahtlose Funkkommunikation konfigurierten Sicherheitselement installiert ist.

2. Verfahren nach Anspruch 1, wobei das Endgerät zur Mobilfunkkommunikation geeignet ist, beispielsweise ein Mobilfunkgerät oder ein Smartphone, und/oder zur WLAN-Kommunikation geeignet ist, beispielsweise ein Laptop/Notebook oder ein Tablet Computer.

3. Verfahren nach Anspruch 1 oder 2 mit dem weiteren Schritt:
(3a) Auslesen der in Schritt (1f) im Wallet Applet abgelegten Tokens durch eine zur Funkkommunikation mit dem Sicherheitselement geeigneten Akzeptanzstelle, beispielsweise einer für drahtlose Funkkommunikation konfigurierten Kasse.

4. Verfahren nach einem der Ansprüche 1 bis 3, wobei Schritt (1a) der Selektion von Objekten die folgenden Schritte aufweist:
(4a) Warten der Fremdanwendung(en) auf eine Interaktion des Nutzers;
(4b) Selektion der Objekte basierend auf der durch die Interaktion des Nutzers an die Fremdanwendung(en) übermittelten Informationen;
wobei vorzugsweise:
die Interaktion des Nutzers ein Markieren von Objekten ist, und
bei Selektion der Objekte durch die Fremdanwendung(en) genau die vom Nutzer markierten Objekte ausgewählt werden.

5. Verfahren nach einem der Ansprüche 1 bis 3, wobei die Selektion von Objekten nach Schritt (1a) durch die Fremdanwendung(en) selbsttätig gemäß vordefinierter Filterkriterien erfolgt.

6. Verfahren nach einem der Ansprüche 1 bis 5, wobei Schritt (1b) des Sendens von Informationen über die selektierten Objekte von den Fremdanwendung(en) an das Wallet über eine im Core Wallet implementierte Schnittstelle zum Übermitteln von Informationen realisiert wird,
wobei vorzugsweise die Information beschreibenden Text und/oder ein oder mehrere graphische Elemente zur Darstellung der Objekte im Wallet aufweist.

7. Verfahren nach einem der Ansprüche 1 bis 6, wobei Schritt (1c) der Darstellung der selektierten Objekte auf einem Endgerät aufweist:
die Anzeige von Text oder graphischen Elementen auf dem Display des Endgeräts; und/oder
das Abspielen akustische Signale oder Ansagen.

8. Verfahren nach einem der Ansprüche 1 bis 7, wobei das Abrufen von Tokens bei den Fremdanwendung(en) durch das Core Wallet gemäß Schritt (1e) über eine in der Fremdanwendung implementierte Schnittstelle zum Abrufen eines Tokens erfolgt.

9. Verfahren nach einem der Ansprüche 1 bis 8, wobei die drahtlose Funkkommunikation durch funkbasierte Nahbereichskommunikation (NFC) realisiert wird.

10. Verfahren nach einem der Ansprüche 1 bis 9, wobei das Sicherheitselement eine Universelle Karte mit integriertem Schaltkreis (Universal Integrated Circuit Card, UICC) oder eine SIM-Karte ist.

11. System zur token-basierten Kommunikation zwischen Fremdanwendungen und einem elektronischen Wallet, wobei das System aufweist:
ein Endgerät, wobei:
das Endgerät konfiguriert ist zur Aufnahme eines oder mehrerer Sicherheitselemente;
auf dem Endgerät eine oder mehrere Programmierschnittstelle(n) (APIs) zum Auflisten, Auswählen und Interagieren mit den Sicherheitselementen installiert sind;
das Endgerät einen Chipsatz zur drahtlosen Funkkommunikation aufweist;
ein oder mehrere mit dem Chipsatz zur drahtlosen Funkkommunikation verbundene
Sicherheitselement(e), die in das Endgerät aufgenommen sind;
das System ist **dadurch gekennzeichnet, dass**
auf dem Endgerät ein Core Wallet installiert ist, wobei das Core Wallet zum Empfang von durch Fremdanwendung(en) gesendeten Informationen und Abrufen von Tokens bei Fremdanwendung(en) konfiguriert ist;
das Endgerät zur Darstellung von Objekten im Core Wallet und zur Aktivierung der Objekte im Core Wallet durch Interaktion des Nutzers konfiguriert ist;
auf den ein oder mehreren Sicherheitselementen jeweils eine Wallet Applet installiert ist, wobei die Wallet Applets jeweils zum Empfang und zur Ablage von Tokens aus dem Core Wallet konfiguriert sind.

12. System nach Anspruch 11, wobei das Endgerät zur Mobilfunkkommunikation geeignet ist, beispielsweise ein Mobilfunkgerät oder ein Smartphone, und/oder zur WLAN-Kommunikation geeignet ist, beispielsweise ein Laptop/Notebook oder ein Tablet Computer.

13. System nach Anspruch 11 oder 12, wobei die Wallet Applets jeweils zum Auslesen der im entsprechenden Wallet Applet abgelegten Tokens durch eine zur Funkkommunikation mit dem Sicherheitselement, auf dem das entsprechende Wallet Applet installiert ist, geeigneten Akzeptanzstelle, beispielsweise einer für drahtlose Funkkommunikation konfigurierten Kasse, konfiguriert sind.

14. System nach einem der Ansprüche 11 bis 13, wobei das Core Wallet eine Schnittstelle zum Übermitteln von Informationen aus den Fremdanwendungen an das Core Wallet aufweist.

15. System nach einem der Ansprüche 11 bis 14, wobei die Fremdanwendungen jeweils eine Schnittstelle zum Abruf von Tokens durch das Core Wallet aufweisen.

16. System nach einem der Ansprüche 11 bis 15, wobei die drahtlose Funkkommunikation durch funkbasierte Nahbereichskommunikation (NFC) realisiert wird.

17. System nach einem der Ansprüche 11 bis 16, wobei jedes der Sicherheitselemente eine Universelle Karte mit integriertem Schaltkreis (Universal Integrated Circuit Card, UICC) oder eine SIM-Karte ist.

## Claims

1. A method for token-based communication between extraneous applications and an electronic wallet in a system, comprising:
a terminal, wherein:
the terminal is configured to accommodate one or more secure element(s);
one or more programming interface(s) (APIs) for listing, selecting and interacting with the secure elements are installed on the terminal;
the terminal comprises a chip set for wireless radio communication; and
one or more secure element(s) that are accommodated in the terminal and connected to the chip set for wireless radio communication; and
wherein the electronic wallet comprises a core wallet;
comprising the following steps:
(1a) selection of items for storing in the core wallet by one or more extraneous application(s);
(1b) sending of information on the selected items to the core wallet by the extraneous application(s);
(1c) display of the selected items on the terminal by the core wallet;
(1d) waiting for the activation of at least one of the displayed items by interaction of the user with the core wallet;
(1e) retrieval of a token associated with the item in the extraneous application from which the item originates by the core wallet for each activated item;
(1f) storing of the tokens retrieved in step (1e) in a wallet applet installed on a secure element that is configured for wireless radio communication.

2. The method of claim 1, wherein the terminal is suitable for mobile radio communication, being for example a mobile radio unit or a smart phone, and/or is suitable for WLAN communication, being for example a laptop/notebook or a tablet computer.

3. The method of claim 1 or 2, further comprising the following step:
(3a) reading out of the tokens stored in the wallet applet according to step (1f) by an acceptance unit suitable for wireless radio communication with the secure element, such as a cash point configured for wireless radio communication.

4. The method of any one of claims 1 to 3, wherein the selecting of items according to step (1a) comprises the following steps:
(4a) waiting of the extraneous application(s) for a user interaction;
(4b) selection of the items on the basis of the information transmitted to the extraneous application(s) by the user interaction,
wherein preferably:
the user interaction is a marking of items; and
during the selection of items by the extraneous application(s), exactly the items marked by the user are selected.

5. The method according to any one of claims 1 to 3, wherein the selection of items according to step (1a) by the extraneous application(s) is automatically made according to predetermined filter criteria.

6. The method according to any one of claims 1 to 5, wherein the sending of information on the selected items by the extraneous application(s) to the wallet according to step (1b) is realised by an interface implemented in the core wallet for transmitting information,
wherein the information preferably comprises descriptive text and/or one or more
graphical elements for displaying the items in the wallet.

7. The method of any one of claims 1 to 6, wherein the display of the selected items on a terminal according to step (1c) comprises:
the display of text or graphical elements on the display of the terminal; and/or
the playback of acoustical signals or speech outputs.

8. The method according to any one of claims 1 to 7, wherein the retrieval of the tokens in the extraneous application(s) by the core wallet according to step (1e) is executed via an interface implemented in the extraneous application for retrieving a token.

9. The method according to any one of claims 1 to 8, wherein the wireless radio communication is realised by radio-based near field communication (NFC).

10. The method according to any one of claims 1 to 9, wherein the secure element is a Universal Integrated Circuit Card (UICC) or a SIM card.

11. A system for token-based communication between extraneous applications and an electronic wallet, the system comprising:
a terminal, wherein
the terminal is configured to take up one or more secure element(s);
one or more application programming interface(s) (APIs) for listing, selecting and interacting with the secure elements are installed on the terminal;
the terminal comprises a chip set for wireless radio communication;
one or more secure element(s) connected to the chip set for wireless radio
communication and accommodated by the terminal,
the system being **characterised in that**
a core wallet is installed on the terminal, wherein the core wallet is configured for receiving information sent by (an) extraneous application(s) and retrieving tokens in (an) extraneous application(s);
the terminal is configured for displaying items in the core wallet and activating the items in the core wallet by user interaction;
a wallet applet is installed on each of the one or more secure element(s), wherein each of the wallet applets is configured for receiving and storing tokens from the core wallet.

12. The system according to claim 11, wherein the terminal is suitable for mobile radio communication, being for example a mobile radio unit or a smart phone, and/or is suitable for WLAN communication, being for example a laptop/notebook or a tablet computer.

13. The system according to claim 11 or 12, wherein each wallet applet is configured for reading out the tokens stored in the respective wallet applet by an acceptance unit that is suitable for radio communication with the secure element on which the respective wallet applet is installed, such as a cash point configured for wireless radio communication

14. The system according to any one of claims 11 to 13, wherein the core wallet comprises an interface for transmitting information from the extraneous applications to the core wallet.

15. The system according to any one of claims 11 to 14, wherein each of the extraneous applications comprises an interface for retrieving tokens via the core wallet.

16. The system according to any one of claims 11 to 15, wherein the wireless radio communication is realised by radio-based near field communication (NFC).

17. The system according to any one of claims 11 to 16, wherein each of the secure elements is a Universal Integrated Circuit Card (UICC) or a SIM card.

## Revendications

1. Procédé de communication à base de jeton entre des applications tierces et un porte-monnaie électronique sur un système comportant:
un poste terminal, dans lequel:
le poste terminal est configuré pour la réception d'un ou de plusieurs élément(s) de sécurité ;
une ou plusieurs interface(s) de programmation (API) est/sont installée(s) sur le poste terminal pour lister, sélectionner et interagir avec les éléments de sécurité ;
le poste terminal présente un jeu de puces pour la communication radio sans fil ;
un ou plusieurs élément(s) de sécurité relié(s) au jeu de puces pour la communication radio sans fil, qui est/sont contenu(s) dans le poste terminal, et
dans lequel le porte-monnaie électronique présente un porte-monnaie principal ;
avec les étapes suivantes:
(1a) sélection d'objets à déposer dans le porte-monnaie principal par une ou plusieurs application(s) tierce(s) ;
(1b) envoi d'informations au sujet des objets sélectionnés par la/les application(s) tierce(s) au porte-monnaie principal ;
(1c) représentation des objets sélectionnés par le porte-monnaie principal sur le poste terminal ;
(1d) attente de l'activation d'au moins l'un des objets sélectionnés par interaction de l'usager avec le porte-monnaie principal ;
(1e) appel d'un jeton associé à l'objet auprès de l'application tierce, d'où l'objet provient, par le porte-monnaie principal pour chacun des objets activés ;
(1f) dépôt du jeton appelé à l'étape (1e) dans une applet porte-monnaie, qui est installée sur un élément de sécurité configuré pour une communication radio sans fil.

2. Procédé selon la revendication 1, dans lequel le poste terminal convient pour la communication téléphonique mobile, par exemple un téléphone mobile ou un smartphone, et/ou convient pour la communication WLAN, par exemple un ordinateur portable/micro-ordinateur ou un ordinateur tablette.

3. Procédé selon la revendication 1 ou 2 comprenant l'étape suivante:
(3a) lecture du jeton déposé dans l'applet porte-monnaie à l'étape (1f) par un poste d'acceptation approprié pour la communication radio avec un élément de sécurité, par exemple une caisse configurée pour une communication radio sans fil.

4. Procédé selon l'une quelconque des revendications 1 à 3, dans lequel l'étape (1a) de sélection d'objets présente les étapes suivantes:
(4a) attente par la/les application(s) tierce(s) d'une interaction de l'usager ;
(4b) sélection des objets en se basant sur les informations transmises par l'interaction de l'usager à la/aux application(s) tierce(s) ;
dans lequel de préférence:
l'interaction de l'usager est un marquage d'objets et lors de la sélection des objets par la/les application(s) tierce(s), seuls les objets marqués par l'usager sont sélectionnés.

5. Procédé selon l'une quelconque des revendications 1 à 3, dans lequel la sélection d'objets selon l'étape (1a) par la/les application(s) tierce(s) est effectuée de façon automatique selon des critères de filtrage prédéfinis.

6. Procédé selon l'une quelconque des revendications 1 à 5, dans lequel l'étape (1b) d'envoi d'informations au sujet des objets sélectionnés par la/les application(s) tierce(s) au porte-monnaie est réalisée par l'intermédiaire d'une interface implémentée dans le porte-monnaie principal pour la transmission d'informations,
dans lequel l'information présente de préférence un texte descriptif et/ou un ou plusieurs élément(s) graphique(s) pour la représentation des objets dans le porte-monnaie.

7. Procédé selon l'une quelconque des revendications 1 à 6, dans lequel l'étape (1e) de représentation des objets sélectionnés sur un poste terminal présente:
l'affichage de texte ou d'éléments graphiques sur l'écran du poste terminal ; et/ou
la diffusion de signaux ou d'annonces acoustiques.

8. Procédé selon l'une quelconque des revendications 1 à 7, dans lequel l'appel de jetons auprès de la/des application(s) tierce(s) par le porte-monnaie principal selon l'étape (1e) est effectué par l'intermédiaire d'une interface pour l'appel d'un jeton implémentée dans l'application tierce.

9. Procédé selon l'une quelconque des revendications 1 à 8, dans lequel la communication radio sans fil est réalisée par une communication à courte distance à base radio (NFC).

10. Procédé selon l'une quelconque des revendications 1 à 9, dans lequel l'élément de sécurité est une carte universelle avec un circuit intégré (Universal Integrated Circuit Card, UICC) ou une carte SIM.

11. Système de communication à base de jeton entre des applications tierces et un porte-monnaie électronique, dans lequel le système présente:
un poste terminal, dans lequel:
le poste terminal est configuré pour la réception d'un ou de plusieurs élément(s) de sécurité ;
une ou plusieurs interface(s) de programmation (API) est/sont installée(s) sur le poste terminal pour lister, sélectionner et interagir avec les éléments de sécurité ;
le poste terminal présente un jeu de puces pour la communication radio sans fil ;
un ou plusieurs élément(s) de sécurité relié(s) au jeu de puces pour la communication radio sans fil, qui est/sont contenu(s) dans le poste terminal ;
le système est **caractérisé en ce que**:
un porte-monnaie principal est installé sur le poste terminal, dans lequel le porte-monnaie principal est configuré pour la réception d'informations envoyées par une/des application(s) tierce(s) et l'appel de jetons auprès de la/des application(s) tierce(s) ;
le poste terminal est configuré pour la représentation d'objets dans le porte-monnaie principal et pour l'activation des objets dans le porte-monnaie principal par interaction de l'usager ;
une applet porte-monnaie est respectivement installée sur un ou plusieurs élément(s) de sécurité, dans lequel les applets porte-monnaie sont respectivement configurées pour la réception et pour le dépôt de jetons provenant du porte-monnaie principal.

12. Système selon la revendication 11, dans lequel le poste terminal convient pour la communication téléphonique mobile, par exemple un téléphone mobile ou un smartphone, et/ou convient pour la communication WLAN, par exemple un ordinateur portable/micro-ordinateur ou un ordinateur tablette.

13. Système selon la revendication 11 ou 12, dans lequel les applets porte-monnaie sont respectivement configurées pour la lecture des jetons déposés dans l'applet porte-monnaie correspondante par un poste d'acceptation convenant pour la communication radio avec l'élément de sécurité, sur lequel l'applet porte-monnaie correspondante est installée, par exemple une caisse configurée pour une communication radio sans fil.

14. Système selon l'une quelconque des revendications 11 à 13, dans lequel le porte-monnaie principal présente une interface pour transmettre des informations à partir des applications tierces au porte-monnaie principal.

15. Système selon l'une quelconque des revendications 11 à 14, dans lequel les applications tierces présentent chacune une interface pour l'appel de jetons par le porte-monnaie principal.

16. Système selon l'une quelconque des revendications 11 à 15, dans lequel la communication radio sans fil est réalisée par une communication à courte distance à base radio (NFC).

17. Système selon l'une quelconque des revendications 11 à 16, dans lequel chacun des éléments de sécurité est une carte universelle avec circuit intégré (Universal Integrated Circuit Card, UICC) ou une carte SIM.
